(19) Europäisches Patentamt
European Patent Office
Office européen des brevets

(11) Veröffentlichungsnummer: **0 238 968**
**B1**

(12) **EUROPÄISCHE PATENTSCHRIFT**

(45) Veröffentlichungstag der Patentschrift: **25.01.89**

(51) Int. Cl.⁴: **D21H 3/38,** C08F 8/14

(21) Anmeldenummer: **87103796.6**

(22) Anmeldetag: **16.03.87**

(54) **Oberflächenleimungsmittel für Papier.**

(30) Priorität: **25.03.86 DE 3609981**

(43) Veröffentlichungstag der Anmeldung: **30.09.87 Patentblatt 87/40**

(45) Bekanntmachung des Hinweises auf die Patenterteilung: **25.01.89 Patentblatt 89/4**

(84) Benannte Vertragsstaaten: **CH DE FR GB IT LI SE**

(56) Entgegenhaltungen: **EP-A- 0 171 727**

(73) Patentinhaber: **BAYER AG, Konzernverwaltung RP Patentabteilung, D-5090 Leverkusen 1 Bayerwerk(DE)**

(72) Erfinder: **Sackmann, Günter, Dr., Friedenberger Strasse 11, D-5090 Leverkusen 3(DE)**
Erfinder: **Beck, Ulrich, Dr., Weiherstrasse 17, D-5303 Bornheim 3(DE)**
Erfinder: **König, Joachim, Dr., Auf dem Broich 25, D-5068 Odenthal(DE)**
Erfinder: **Bäumgen, Heinz, Buchenweg 10, D-5090 Leverkusen 1(DE)**
Erfinder: **Albrecht, Klaus-Dieter, Dr., Willi-Baumeister-Strasse 3, D-5090 Leverkusen 1(DE)**

**EP 0 238 968 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Oberflächenleimungsmittel für Papier und papierähnliche Materialien auf Basis von partiell mit aliphatischen Monoalkoholen bisveresterten Copolymerisaten aus Maleinsäureanhydrid, Diisobutylen und gegebenenfalls einem Vinylmonomeren, die auf Papiersorten unterschiedlicher Zusammensetzung eine ausgezeichnete Leimungswirkung ergeben und die in Stärke enthaltenden Leimungsflotten nur sehr wenig oder aber überhaupt nicht zum Schäumen neigen.

Zwar gibt es bereits eine Reihe von anionischen Oberflächenleimungsmitteln auf Basis alternierend aufgebauter Copolymerisate aus Maleinsäureanhydrid und Diisobutylen, wie sie in den Deutschen Offenlegungsschriften 2 361 544, 2 501 123 und 2 701 760 beschrieben sind. Diese Leimungsmittel weisen ausgezeichnete Leimungswirkungen auf, besitzen jedoch auch einige anwendungstechnische Nachteile, z.B. ihre unter bestimmten Praxisbedingungen auftretende Neigung zur Schaumbildung. Diese Schaumbildung, die – häufig in der Leimpressenflotte zu beobachten ist, kann verschiedene Ursachen haben; z.B. die Wasserhärte, die Art der verwendeten Stärke oder apparative Gegebenheiten an der Papiermaschine. Die EP-A 10 009 185 gibt zwar eine Lehre zur Herstellung eines schaumarmen Oberflächenleimungsmittels für Papier in Form von wäßrigen oder wäßrig-alkoholischen Alkali-, Amin- oder Ammoniumsalzlösungen von Carbonsäurehalbamidgruppen enthaltenden Copolymerisaten aus Maleinsäureanhydrid und Diisobutylen und/oder Terpolymerisaten aus Maleinsäureanhydrid, Diisobutylen und einem mit Maleinsäureanhydrid copolymerisierenden Vinylmonomeren. Im praktischen Einsatz dieses Leimungsmittels hat sich jedoch gezeigt, daß seine Schaumwirkung – obwohl gering – in vielen Fällen doch noch zu hoch ist.

Durch die DE-OS 3 429 961, die Leimungsmittel auf Basis von Copolymerisaten aus Maleinsäureanhydrid, Diisobutylen und gegebenenfalls einem Vinylmonomeren beschreibt, die partiell mit aliphatischen Monoalkoholen zu 25 bis 90 Mol-% – bezogen auf die Anhydridgruppen – bisverestert sind, erhält man Leimungsmittel mit einer geringeren Neigung zur Schaumbildung als dem bis dahin geltenden Stand der Technik entspricht. Der dort angegebene relative hohe Veresterungsgrad von 25 bis 90 Mol-% kann bei der Herstellung und Verarbeitung der Leimungsmittel erhebliche technische Nachteile mit sich bringen: Wenn im Verlaufe der Herstellung des Produktes die veresterte organische Polymerlösung vom Lösungsmittel – z.B. durch Strippen – befreit wird, dann fällt des Copolymerisat als zähe, nur schwer verarbeitbare Masse an. Ein weiterer Nachteil ist die durch einen hohen Veresterungsgrad verursachte relativ hohe Lösungsviskosität der fertigen wäßrigen Leimungsmittellösungen.

Diese Schwierigkeiten können nun weitgehend vermieden werden, wenn man zur Herstellung der Leimungsmittel ein Copolymerisat einsetzt, das zu etwa 3 bis etwa 20 Mol-%, bezogen auf die Anhydridgruppen, mit aliphatischen Monoalkoholen bisverestert ist. Überraschenderweise wurde nämlich gefunden, daß durch diesen geringen Veresterungsgrad weder die Leimungswirkung noch das günstige Schaumverhalten der Papieroberflächenleimungsmittel negativ beeinflußt werden.

Die vorliegende Erfindung betrifft Oberflächenleimungsmittel für Papier und papierähnliche Materialien, wie Karton oder Pappe, enthaltend wäßrige- oder wäßrig-alkoholische Alkali-, Amin- oder Ammoniumsalzlösungen von Copolymerisaten aus Maleinsäureanhydrid und Diisobutylen und gegebenenfalls einem Vinylmonomeren der Formel

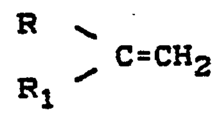

in der
R H, $-CH_3$, $-C_2H_5$, $-OR_2$, $-OCOCH_3$,

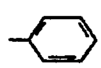 , 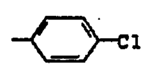 , 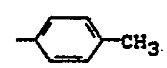

$-CH_2OH$, $-CH_2-O-COCH_3$,
$R_1$ H, $-CH_3$ und
$R_2$ Alkyl bezeichnen,
wobei die Anhydridgruppen der Copolymerisate mit aliphatischen Monoalkoholen mit 1–12 C-Atomen bisverestert sind. Sie ist dadurch gekennzeichnet, daß die Anhydridgruppen zu 3 bis 20 Mol-%, bezogen auf die Anhydridgruppen, vorzugsweise zu 10 bis 15 Mol-% bisverestert sind.

Vorzugsweise enthalten die Copolymerisate nebeneinander Struktureinheiten (II), (III) und (IV):

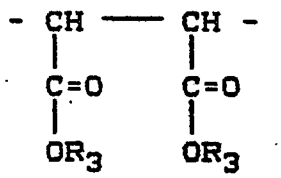 II

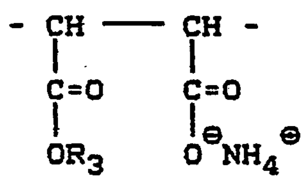 III

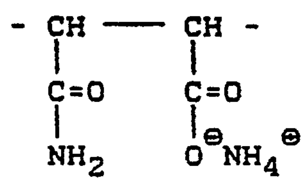 IV

$R^3$ steht für einen linearen, verzweigten oder cyclischen $C_1$–$C_{12}$-Kohlenwasserstoffrest.

Bevorzugt beträgt das molare Verhältnis von II : III : IV = 1 : 2–10 : 2–10, besonders bevorzugt 1 : 2–5 : 4–6.

Die neuen Leimungsmittel zeichnen sich dadurch aus, daß sie bei ihrem Einsatz auf der Leimpresse einer Papiermaschine wenig oder keinen Schaum entwickeln und gleichzeitig ausgezeichnete Leimungsseigenschaften besitzen.

Es sind zwar die Halbesterprodukte der obengenannten Copolymerisate als sehr wirksame Leimungsmittel bekannt, aber sie besitzen eine ausgeprägte Neigung zur Schaumbildung, die sowohl beim Herstellungsprozeß als auch bei ihrer Anwendung auf der Papiermaschine deutlich zu beobachten ist. Durch die weitere Umsetzung der polymeren Halbester mit Monoalkohol zu partiellen Bisestern wird nun die Schaumbildung dieser Substanzen stark unterdrückt ohne Beeinträchtigung ihrer ausgezeichneten Leimungswirkung.

Geeignete Vinylmonomere der Formel (I) zur Herstellung der Terpolymerisate sind beispielsweise Isobutylen, Styrol, α-Methylstyrol, Allylalkohol und Isobutylvinylether.

Die Herstellung der den neuen Leimungsmittel zugrunde liegenden Copolymerisate ist aus der Literatur bekannt.

Vorzugsweise verwendet man auf radikalischem Wege hergestellte Copolymerisate aus 0,8–1,1 Mol Maleinsäureanhydrid und 0,8–1,1 Mol Diisobutylen bzw. Diisobutylen/Vinylmonomer der Formel I, wobei die Molangaben für Diisobutylen sich auf den Gehalt an 2,4,4-Trimethylpenten-(1) beziehen.

Zur Auslösung dieser Copolymerisation können radikalbildende Substanzen, wie z.B. Peroxide, Hydroperoxide, Perester, Azoverbindungen sowie Redoxkatalysatorsysteme eingesetzt werden.

Die Polymerisation kann drucklos in Substanz oder bevorzugt in Lösung durchgeführt werden. Erfolgt sie in Lösung, so sind solche Lösungsmittel bevorzugt, in denen sich sowohl die Monomeren als auch die Copolymeren lösen, z.B. Aromaten wie Benzol, Toluol, halogenierte Aromaten wie Chlorbenzol, Chlortoluol, niedere Ketone wie Aceton, Ethylmethylketon, Ester niederer Fettsäuren wie Essigsäureethylester, chlorierte aliphatische Kohlenwasserstoffe wie Chloroform, Tetrachlorkohlenstoff, Ether wie Tetrahydrofuran, stark polare Lösungsmittel wie Dimethylformamid oder Dimethylsulfoxid. Die Polymerisationstemperatur liegt zwischen 20 und 150°C, vorzugsweise aber zwischen 30 und 120°C.

Als Beispiele für die einzusetzenden Monoalkohole seien genannt: Methanol, Ethanol, n-Propanol, Isopropanol, n-Butanol, Isobutanol, sec.-Butanol, n-Pentanol, Isoamylalkohol, n-Hexanol, n-Octanol, n-Dodecanol, Cyclohexanol und 2-Ethylhexanol; n-Butanol wird bevorzugt eingesetzt.

Es können aber auch Gemische dieser Alkohole eingesetzt werden.

Die Umsetzung der Copolymerisate aus Maleinsäureanhydrid und Diisobutylen oder der Terpolymerisate aus Maleinsäureanhydrid, Diisobutylen und einem Vinylmonomeren der Formel (I) mit dem Monoalkohol erfolgt in Lösung oder Suspension in Gegenwart eines Schleppmittels für das sich abspaltende Reaktionswasser, wie z.B. Benzol, Toluol oder Xylol, bei der Siedetemperatur des jeweiligen Schleppmittels. Werden niedrigsiedende Alkohole zur Veresterung eingesetzt, dann wird die Reaktion unter Druck vorgenommen. Der Temperaturbereich der Veresterungsreaktion liegt im allgemeinen zwischen 80 und 170°C.

Zur Beschleunigung der Veresterungsreaktion können dem Reaktionsgemisch saure Katalysatoren, wie z.B. Schwefelsäure oder p-Toluolsulfonsäure, in Mengen zwischen 0,1 und 5 Gew.-%, bezogen auf das eingesetzte Polymerisat, zugesetzt werden.

Bevorzugt ist dabei p-Toluolsulfonsäure in einer Menge zwischen 0,5 und 2 Gew.-%. Bei der Durchführung der Veresterungsreaktion kann aber auch in der Weise vorgegangen werden, daß zunächst eine Halbesterbildung zwischen dem Co- oder Terpolymerisat und dem Monoalkohol erfolgt und daran anschließend durch Zugabe von weiterem Monoalkohol zusammen mit dem sauren Katalysator ein Teil der Carboxylgruppen unter Wasserabspaltung zum Bisester umgesetzt wird. Die Halbesterbildung kann dabei entweder in Substanz, Suspension oder einem Lösungsmittel bei Temperaturen zwischen 80 und 160°C, bevorzugt bei 100–140°C, durchgeführt werden. Die sich daran anschließende Bisveresterung wird dann unter den oben genannten Reaktionsbedingungen durchgeführt. Die Reaktionszeit liegt zwischen 4 und 24 Stunden. In der Regel wird sie aber dann als beendet betrachtet, wenn kein Reaktionswasser mehr abgespalten wird.

Natürlich ist es auch möglich, Diisobutylen direkt mit einem Gemisch aus Maleinsäurehalbester und Maleinsäurebisester, die durch direkte Veresterung aus Maleinsäureanhydrid mit den entsprechenden Monoalkoholen erhältlich sind, unter denselben Bedingungen, wie sie bei der Diisobutylen-Maleinsäureanhydrid-Copolymerisation üblich sind, zu den entsprechenden Copolymerisaten zu copolymerisieren.

Da die Veresterung der Maleinsäureanhydridmonomereinheiten nie quantitativ durchgeführt wird, und somit immer Carboxylgruppen sowie in geringem Umfange auch cyclische Anhydridgruppen übrigbleiben, können die veresterten Co- und Terpolymerisate durch Neutralisation mit wäßrigen Alkali-, Ammoniak- oder Aminlösungen in wasserlösliche Salze überführt werden.

Die Salzbildung kann z.B. durch die Hydroxide der Alkalimetalle, wie Natrium- und Kaliumhydroxid, Ammoniak oder durch primäre, sekundäre oder tertiäre Amine, wie Methylamin, Dimethylamin, Ethanolamin, Triethylamin, Diethanolamin oder Triethanolamin, erfolgen.

Da – wie aus IR-Spektrum ersichtlich – neben den Halbester und Bisestergruppierungen immer auch noch nicht umgesetzte Anhydrideinheiten in den Co- und Terpolymerisaten vorhanden sind, führt die Umsetzung mit den wäßrigen Alkali-, Ammoniak- oder Aminlösungen auch zur Bildung von Halbamid/Halbammoniumsalzen, die ebenfalls wasserlöslich sind.

Diese wäßrigen Lösungen eignen sich vorzüglich als anionische nicht schäumende Papierleimungsmittel im sauren und neutralen Bereich bei der Herstellung von alaunhaltigen, alaunfreien, vorgeleimten und holzhaltigen Papieren, die unterschiedliche Füllstoffe, wie Kaolin, Kreide und $TiO_2$ enthalten können.

In der Praxis wird zur Herstellung der Maleinsäureanhydrid-Diisobutylen-Copolymerisate ein technisches Gemisch aus 2,4,4-Trimethylpenten-(1) und 2,4,4-Trimethylpenten-(2) eingesetzt, wobei vornehmlich die Penten-(1)-Verbindung zu hochmolekularen Copolymerisaten reagiert.

In einer bevorzugten Ausführung der Erfindung werden die Leimungsmittel als wäßrige Lösungen in Mischung mit Harnstoff und Harnstoffderivaten eingesetzt. Durch diese Abmischung ergibt sich ein zusätzlicher leimungsverstärkender Effekt sowie eine starke Verminderung der Lösungsviskosität der erfindungsgemäßen Leimungsmittel. Vorzugsweise eingesetzte Harnstoffderivate sind solche, bei denen eines oder beide Stickstoffatome mit $C_1$–$C_4$-Alkylgruppen oder $C_1$–$C_4$-Hydroxyalkylgruppen, wie z.B. Hydroxymethylgruppen, substituiert sind. Als Beispiele für derartige Derivate seien Dimethylharnstoff, Tetramethylharnstoff und Dimethylolharnstoff genannt. Die Menge an zugesetztem Harnstoff bzw. Harnstoffderivaten beträgt dabei im allgemeinen 10 bis 200 Gew.-%, vorzugsweise 20 bis 100 Gew.-%, bezogen auf das Gewicht der Alkali-, Ammonium- und Aminsalze bzw. auf die Halbamid/Halbammoniumsalze der partiell mit Monoalkoholen bisveresterten Co- bzw. Terpolymerisate auf Basis von Maleinsäureanhydrid und Diisobutylen.

Durch den Zusatz von Harnstoff bzw. Harnstoffderivaten zu den Polymerisatlösungen kann die Konzentration dieser Polymerisate in der wäßrigen Leimungsmittellösung stark verringert werden, wobei dieselbe Leimungswirkung erreicht wird, wie man sie bei alleiniger Anwendung der Polymerisate nur bei erheblich höheren Konzentrationen erzielen kann. Durch den Harnstoffzusatz wird also bewirkt, daß z.B. die Menge an wasserlöslichem Salz der partiell bisveresterten Co- und Terpolymerisate in der Leimungsmittellösung stark verringert werden kann, ohne daß die ausgezeichneten Leimungseigenschaften der Produkte vermindert werden.

Die erfindungsgemäßen Oberflächenleimungsmittel für Papier sind nach allen bei der Papierherstellung für die Oberflächenleimung gebräuchlichen Verarbeitungsmethoden einsetzbar. Die Leimungsmittel können sowohl alleine als auch in Kombination mit Kunststoffdispersionen zur Anwendung kommen. Sie sind gegenüber schaumfördernden Einflüssen, wie z.B. ungünstigen apparativen Voraussetzungen und hohen Härtegraden des bei der Papierherstellung verwendeten Wassers, unempfindlich, so daß die Papieroberflächenleimungsmittel praktisch überall ohne eine den Produktionsvorgang störende Schaumbildung sowie ohne einen Zusatz von Entschäumern eingesetzt werden können. Die erfindungsgemäßen Produkte eignen sich entweder alleine oder in Kombination mit Leimungsmitteln, die zur Papiermasse zugegeben werden, für die Oberflächenleimung der meisten gängigen Papierqualitäten, wie z.B. alaunhaltige, alaunfreie, mit Kaolin gefüllte, mit Kreide gefüllte, mit $TiO_2$ gefüllte, neutrale, saure, ungeleimte, vorgeleimte, holzartige und Altpapier enthaltende Papiere.

Die Prozentangaben in den folgenden Beispielen beziehen sich stets auf das Gewicht.

<u>Beispiele</u>

Herstellung des Papieroberflächenleimungsmittels I

In einem 40-l-Stahlautoklaven, auf den eine Einrichtung zum Abscheiden von Wasser mit der Möglichkeit zur Rückführung von Lösungsmittel in den Kessel aufgebaut ist, wird eine Lösung von 3998 g Maleinsäureanhydrid in 5100 g Toluol vorgelegt. Danach wird der Reaktor mit Stickstoff gespült und die Innentemperatur auf 100°C angehoben. Unter weiterem Überleiten von Stickstoff werden über zwei Dosierpumpen gleichzeitig 6528 g Diisobutylen (technisches Gemisch aus 2,4,4-Trimethylpenten-1 und 2,4,4-Trimethylpenten-2) sowie eine Lösung von 128 g Azobisisobutyronitril (AIBN) in 2500 g Toluol innerhalb von 4 Stunden in den Autoklaven eingepumpt. Nach beendeter Zudosierung wird noch 6 Stunden bei 100°C gerührt, und danach gibt man ebenfalls gleichzeitig innerhalb von 30 Minuten 306 g Isobutylen und eine Lösung von 38 g t-Butyl-per-2-ethyl-hexanoat in 306 g Toluol zu. Danach wird noch zwei Stunden bei 100°C gerührt und anschließend die Kesseltemperatur so weit angehoben, daß das Lösungsmittel zum Sieden kommt. Über die Apparatur zur Wasserabscheidung werden nun ca. 3000 g eines Lösungsmittelgemisches aus dem Reaktor entfernt, dessen Hauptbestandteil 2,4,4-Trimethylpenten-2 darstellt.

Nach Entfernen des Destillats wird über ein Nachrückgefäß eine Lösung von 3019 g n-Butanol und 75 g p-Toluolsulfonsäure in 2000 g Toluol eingebracht und die Temperatur soweit angehoben, daß die Reaktionsmischung kräftig siedet, wobei eine azeotrope Abscheidung von Reaktionswasser stattfindet. Das gleichzeitig mit dem Wasser abdestillierende Lösungsmittel wird immmer wieder in den Autoklaven zurückgeleitet. Nach 12 Stunden unter Siedetemperatur ist die Wasserabscheidung beendet. Danach wird auf 70°C abgekühlt und 50 g Triethylamin zugegeben.

Aus der abgespaltenen Wassermenge wird errechnet, daß das Polymere ca. 11 Mol-% an Bisestereinheiten (II), und aus IR-spektroskopischen Untersuchungen ergibt sich, daß es ca. 50 Mol-% an Monoestereinheiten (III) enthält. Aus der Differenz zu 100% kann auf die Menge an Einheiten (IV) geschlossen werden.

Die entstandene Polymerlösung wird kontinuierlich in einen 100-l-Rührkessel mit aufgesetztem Kühler, in dem sich eine auf 60°C erwärmte Lösung von 5100 g Harnstoff in 51 000 g Wasser befindet, eingeleitet. Dabei wird unter Abdestillieren des Lösungsmittels bei einem Vakuum von ca. 100 mbar das Polymerisat als feines weißes Pulver ausgefällt. Wenn kein Lösungsmittel mehr übergeht, wird das ausgefallene Produkt durch Zugabe von 4300 g einer wäßrigen Ammoniaklösung aufgelöst und

durch Entgasen im Vakuum von Lösungsmittel- und Monomerresten befreit. Durch Verdünnen mit Wasser wird die erhaltene Polymerlösung auf einen Feststoffgehalt von 20,8 Gew.-% eingestellt.

Viskosität: 107 mPas (20°C).

Diese wäßrige Lösung kann direkt zur Oberflächenleimung von Papier eingesetzt werden.

Leimungsmittel II:

Durch Substitution von n-Butanol durch Isoamylalkohol erhält man das Leimungsmittel II, das ca. 11 Mol-% Bisestereinheiten (II) und ca. 40 Mol-% Monoestereinheiten (III) enthält.

Die folgenden Anwendungsbeispiele sollen die geringe Schaumneigung der erfindungsgemäßen Leimungsmittel nachweisen.

0,4 Gew.-% Wirksubstanz werden in einer Leimungsflotte aus 5 Gew.-% handelsüblicher Stärke (Perfectamyl A 4692®) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm in ein graduiertes Becherglas im freien Fall geleitet. Das Volumen in ml des sich über der Flüssigkeitsoberfläche bildenden Schaums wird einmal sofort sowie nach 1minütigem Stehen an der Luft bestimmt. Der erste Wert gibt dabei Aufschluß über die Schaumbildungstendenz des Leimungsmittels und der zweite Wert über die Schnelligkeit des Schaumabbaus bzw. dessen Stabilität.

| | Schaumvolumen in ml | |
|---|---|---|
| Leimungsmittel | sofort | nach 1 Minute |
| Erfindungsgemäßes Leimungsmittel I | 80 | 60 |
| Erfindungsgemäßes Leimungsmittel II | 60 | 30 |
| Leimungsmittel gem. DE-OS 3 429 961 | 90 | 70 |
| Leimungsmittel gem. DE-OS 2 361 544 | 200 | 160 |
| Leimungsmittel gem. EP 0 009 185 | 150 | 120 |

Man erkennt aus dieser Zusammenstellung deutlich, daß die erfindungsgemäßen Leimungsmittel das gleiche günstige Schaumverhalten wie das gemäß DE-OS 3 429 961 erhaltene Produkt aufweisen.

Die Leimunswirkung der erfindungsgemäßen Leimungsmittel wurde auf drei verschiedenen Papiersorten geprüft, welche folgende Zusammensetzung hatten:

Alaunhaltiges Papier:
50% Nadelholzzellstoff, 50% Laubholzzellstoff, 1% Alaun, 11,2% Clay-Asche, pH-Wert im Stoffauflauf: 4,4; Naßaufnahme: ca. 80%; Papiergewicht: 80 g/m$^2$.

Vorgeleimtes Papier:
50% Nadelholzzellstoff, 50% Laubholzzellstoff, 1% Alaun, 0,1% Bewoid-Leim, 11,1% Clay-Asche, pH-Wert im Stoffauflauf: 4,5; Naßaufnahme: ca. 70%; Papiergewicht: 80 g/m$^2$.

Holzhaltiges Papier:
40% Nadelholzzellstoff, 60% Holzschliff, 14,1% Clay-Asche, pH-Wert im Stoffauflauf: 4,5; Naßaufnahme: ca. 50%; Papiergewicht 75 g/m$^2$.

Die Leimung der Papiere erfolgte auf einer Laborleimpresse der Fa. Mathis, Zürich, Schweiz, Type HF. Als Leimungsflotte wurde eine Lösung von 5 Gew.-% handelsüblicher Stärke und 0,13, 0,16 und 0,20 Gew.-% des zu prüfenden Leimungsmittels (berechnet als 100%ige Wirksubstanz) in 94,87, 94,84 und 94,80 Gew.-% Wasser verwendet.

Die Trocknung der oberflächengeleimten Papiere erfolgte auf einem Trockenzylinder innerhalb einer Minute bei ca. 100°C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt.

Die folgende Tabelle gibt die Cobb-Werte der erfindungsgemäßen Leimungsmittel auf drei verschiedenen Papiersorten und mit zwei unterschiedlichen Einsatzmengen wieder. Zum Nachweis, daß trotz der im Vergleich zum Leimungsmittel gemäß DE-OS 3 429 961 wesentlich niedrigeren Gehalte an Bisester die Leimungswirkung der Produkte nicht verschlechtert wird, sind in der Tabelle neben den Cobb-Werten für die Leimungsmittel I und II auch die Cobb-Werte für ein gemäß DE-OS 3 429 961 hergestelltes Leimungsmittel wiedergegeben.

| Papiersorte | Cobb-Wert in g/m$^2$ bei Zusatz von | |
|---|---|---|
| | 0,20% | 0,25% |
| | Leimungsmittel I | |
| Alaunhaltig | 25,1 | 24,0 |
| Vorgeleimt | 23,8 | 23,2 |
| Holzhaltig | 23,1 | 21,5 |

| Papiersorte | Cobb-Wert in g/m$^2$ bei Zusatz von | |
|---|---|---|
| | 0,20% | 0,25% |
| | Leimungsmittel II | |
| Alaunhaltig | 25,5 | 24,3 |
| Vorgeleimt | 24,7 | 23,9 |
| Holzhaltig | 24,4 | 23,8 |

| Papiersorte | Cobb-Wert in g/m$^2$ bei Zusatz von | |
|---|---|---|
| | 0,20 % | 0,25 % |
| | Leimungsmittel gem. DE-OS 3 429 961 | |
| Alaunhaltig | 24,7 | 24,1 |
| Vorgeleimt | 26,6 | 25,7 |
| Holzhaltig | 22,3 | 21,7 |

## Patentansprüche

1. Oberflächenleimungsmittel für Papier enthaltend wäßrige oder wäßrig-alkoholische Alkali-, Amin- oder Ammoniumsalzlösungen von Copolymerisaten aus Maleinsäureanhydrid und Diisobutylen und gegebenenfalls einem Vinylmonomeren der Formel

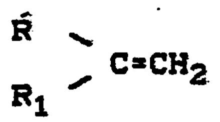

in der
R H, $-CH_3$, $-C_2H_5$, $-OR_2$, $-OCOCH_3$,

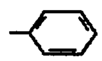 , 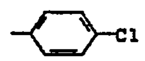 , 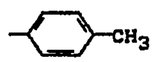

$-CH_2OH$, $-CH_2-O-COCH_3$,
$R_1$ H, $-CH_3$ und
$R_2$ Alkyl bezeichnen,
wobei die Anhydridgruppen der Copolymerisate mit aliphatischen Monoalkoholen mit 1 bis 12 C-Atomen bisverestert sind, dadurch gekennzeichnet, daß die Anhydridgruppen zu 3 bis 20 Mol-%, bezogen auf die Anhydridgruppen, bisverestert sind.

2. Oberflächenleimungsmittel gemäß Anspruch 1, bei dem die Anhydridgruppen zu 10 bis 15 Mol-%, bezogen auf die Anhydridgruppen, bisverestert sind.

3. Oberflächenleimungsmittel gemäß den Ansprüchen 1–2, dadurch gekennzeichnet, daß das Vinylmonomere Isobutylen, Styrol, α-Methylstyrol, Allylalkohol oder Isobutylvinylether ist.

4. Oberflächenleimungsmittel gemäß den Ansprüchen 1–3, dadurch gekennzeichnet, daß als aliphatische Monoalkohole Methanol, Ethanol, n-Propanol, Isopropanol, Isobutanol, sec.-Butanol, n-Pentanol, Isoamylalkohol, n-Hexanol, Cyclohexanol, n-Octanol, n-Dodecanol oder 2-Ethylhexanol oder Gemische dieser Alkohole eingesetzt werden.

5. Oberflächenleimungsmittel gemäß den Ansprüchen 1–3, dadurch gekennzeichnet, daß als Monoalkohol n-Butanol eingesetzt wird.

6. Oberflächenleimungsmittel gemäß den Ansprüchen 1–5, dadurch gekennzeichnet, daß sie Harnstoff oder ein Harnstoffderivat enthalten.

7. Oberflächenleimungsmittel gemäß den Ansprüchen 1–6, dadurch gekennzeichnet, daß sie Harnstoff oder ein N-mono- oder N-di-$C_1$-$C_4$-Alkyl- oder ein N-mono- oder N-di-$C_1$-$C_4$-Hydroxyalkylsubstituiertes Harnstoffderivat enthalten.

8. Oberflächenleimungsmittel gemäß den Ansprüchen 1–7, dadurch gekennzeichnet, daß sie 10–200 Gew.-% Harnstoff oder Harnstoffderivat, bezogen auf das Gewicht der Alkali-, Amin- oder Ammoniumsalze, vorzugsweise 20–100 Gew.-%, enthalten.

9. Oberflächenleimungsmittel gemäß den Ansprüchen 1–8, dadurch gekennzeichnet, daß sie nebeneinander Struktureinheiten

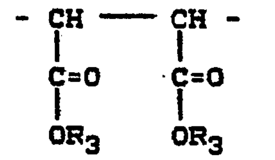 II

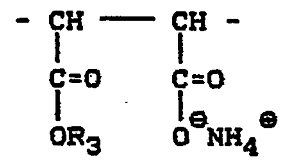 III

und

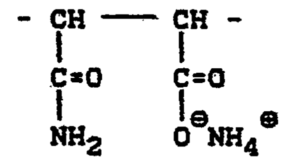 IV

enthalten.

10. Oberflächenleimungsmittel gemäß Anspruch 9, dadurch gekennzeichnet, daß das molare Verhältnis von (II) : (III) : (IV) = 1 : 2–10 : 2–10 beträgt.

## Claims

1. Tub sizes for paper, containing aqueous or aqueous-alcoholic alkali metal, amine or ammonium salt solutions of copolymers of maleic anhydride and diisobutylene and, if appropriate, a vinyl monomer of the formula

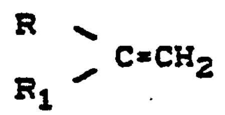

in which
R designates H, $-CH_3$, $-C_2H_5$, $-OR_2$, $-OCOCH_3$,

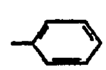 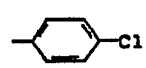 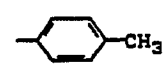

$-CH_2OH$ or $-CH_2-O-COCH_3$,
R1 designates H or $-CH_3$ and
R2 designates alkyl,
the anhydride groups of the copolymers being bis-esterified with aliphatic monoalcohols having 1 to 12 C atoms, characterized in that the anhydride groups are bis-esterified to the extent of 3 to 20 mol%, relative to the anhydride groups.

2. Tub sizes according to Claim 1, wherein the anhydride groups are bis-esterified to the extent of 10 to 15 mol%, relative to the anhydride groups.

3. Tub sizes according to Claims 1–2, characterized in that the vinyl monomer is isobutylene, styrene, α-methylstyrene, allyl alcohol or isobutyl vinyl ether.

4. Tub sizes according to Claims 1–3, characterized in that methanol, ethanol, n-propanol, isopropanol, isobutanol, sec.-butanol, n-pentanol, isoamyl alcohol, n-hexanol, cyclohexanol, n-octanol, n-dodecanol or 2-ethylhexanol or mixtures of these alcohols are used as the aliphatic monoalcohols.

5. Tub sizes according to Claims 1–3, characterized in that n-butanol is used as the monoalcohol.

6. Tub sizes according to Claims 1–5, characterized in that they contain urea or a urea derivative.

7. Tub sizes according to Claims 1–6, characterized in that they contain urea or a urea derivative which is N-monosubstituted or N-disubstituted by $C_1$–$C_4$-alkyl or $C_1$–$C_4$-hydroxyalkyl.

8. Tub sizes according to Claims 1–7, characterized in that they contain 10–200% by weight of urea or urea derivative, relative to the weight of the alkali metal, amine or ammonium salts, preferably 20–100% by weight.

9. Tub sizes according to Claims 1–8, characterized in that they contain, side by side, structural units

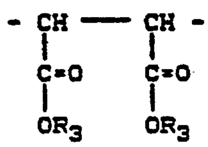

II

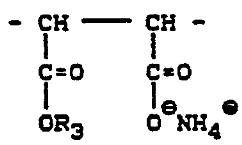

II

and

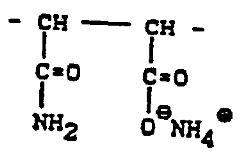

IV

10. Tub sizes according to Claim 9, characterized by a molar ratio of (II) : (III) : (IV) = 1 : 2–10 : 2–10.

## Revendications

1. Compositions de collage en surface pour papier, contenant des solutions aqueuses ou aqueuses-alcooliques de sels de métaux alcalins, d'amines ou d'ammonium de copolymérisats d'anhydride d'acide maléique et de diisobutylène et, le cas échéant, d'un monomère vinylique de formule

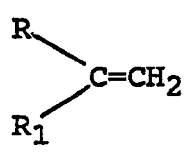

dans laquelle
R représente H, $-CH_3$, $-C_2H_5$, $-OR_2$, $-OCOCH_3$,

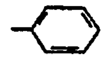 , 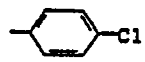 , 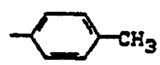

$-CH_2OH$, $-CH_2-O-COCH_3$,
$R_1$ représente H, $-CH_3$ et
$R_2$ désigne un groupe alkyle,
les groupes anhydride des copolymérisats étant bisestérifiés avec des monoalcools aliphatiques de 1 à 12 atomes de carbone, caractérisées en ce que les groupes anhydride sont bisestérifiés en proportion de 3 à 20 moles% par rapport aux groupes anhydride.

2. Compositions de collage en surface suivant la revendication 1, dans lesquelles les groupes anhydride sont bisestérifiés en proportion de 10 à 15 moles%, par rapport aux groupes anhydride.

3. Compositions de collage en surface suivant les revendications 1–2, caractérisées en ce que le monomère vinylique est l'isobutylène, le styrène, l'α-méthylstyrène, l'alcool allylique ou l'éther d'isobutyle et de vinyle.

4. Compositions de collage en surface suivant les revendications 1 à 3, caractérisées en ce qu'on utilise comme monoalcools aliphatiques le méthanol, l'éthanol, le n-propanol, l'isopropanol, l'isobutanol, le sec.-butanol, le n-pentanol, l-alcool isoamylique, le n-hexanol, le cyclohexanol, le n-octanol, le n-dodécanol ou le 2-éthylhexanol ou des mélanges de ces alcools.

5. Compositions de collage en surface suivant les revendications 1 à 3, caractérisées en ce qu'on utilise le n-butanol comme monoalcool.

6. Compositions de collage en surface suivant les revendications 1 à 5, caractérisées en ce qu'elles contiennent de l'urée ou un dérivé d'urée.

7. Compositions de collage en surface suivant les revendications 1 à 6, caractérisées en ce qu'elles contiennent de l'urée ou un dérivé d'urée N-monosubstitué ou N-disubstitué avec un substituant alkyle en $C_1$ à $C_4$ ou N-monosubstitué ou N-disubstitué avec un substituant hydroxyalkyle en $C_1$ à $C_4$.

8. Compositions de collage en surface suivant les revendications 1 à 7, caractérisées en ce qu'elles contiennent 10 à 200% en poids d'urée ou d'un dérivé d'urée, par rapport au poids des sels de métaux alcalins, d'amines ou d'ammonium, de préférence 20 à 100% en poids.

9. Compositions de collage en surface suivant les revendications 1 à 8, caractérisées en ce qu'elles contiennent côte à côte des motifs structuraux

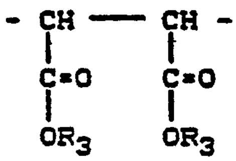

II

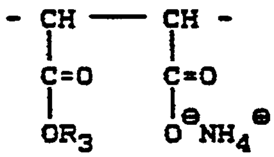

III

et

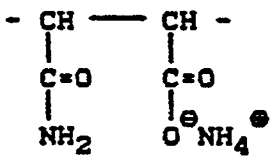

IV

10. Compositions de collage en surface suivant la revendication 9, caractérisées en ce que la proportion de motifs (II) : (III) : (IV) a une valeur de 1 : 2–10 : 2–10.